# EUROPÄISCHE PATENTSCHRIFT

(11) **EP 1 883 561 B1**
(45) Veröffentlichungstag und Bekanntmachung des Hinweises auf die Patenterteilung: **04.07.2012**
(21) Anmeldenummer: 06724742.9
(22) Anmeldetag: 06.05.2006
(51) Int. Cl.: B60R 16/02

(54) **ANSCHLUSS VON PERSÖNLICHEN ENDGERÄTEN AN DAS KOMMUNIKATIONSSYSTEM EINES KRAFTFAHRZEUGES**
CONNECTION OF PERSONAL TERMINALS TO THE COMMUNICATION SYSTEM OF A MOTOR VEHICLE
RACCORDEMENT DE TERMINAUX PERSONNELS AU SYSTEME DE COMMUNICATION D'UN VEHICULE AUTOMOBILE

(30) Priorität: 21.05.2005 DE 102005023544
(43) Veröffentlichungstag der Anmeldung: 06.02.2008
(73) Patentinhaber: Bayerische Motoren Werke Aktiengesellschaft, 80809 München (DE)
(72) Erfinder: WEINMANN, Ulrich, 85386 Eching (DE); WEISS, Jens-Peter, 82110 Germering (DE); STAUNER, Thomas, 85716 Unterschleissheim (DE); MANTHEY, Wolfram, 80339 München (DE)
(86) Internationale Anmeldenummer: PCT/EP2006/004247
(87) Internationale Veröffentlichungsnummer: WO 2006/125515

(56) Entgegenhaltungen:
- US-A1- 2001 016 789
- US-A1- 2003 130 776
- US-A1- 2004 203 370
- US-B1- 6 574 734

## Beschreibung

Die vorliegende Erfindung betrifft ein Kommunikationssystem eines Fahrzeugs. Ein solches Kommunikationssystem besitzt üblicherweise eine Fahrzeug-Bedieneinheit, eine Fahrzeug-Ausgabeeinheit und einen Schnittstellenrechner, der an die Fahrzeug-Bedieneinheit und die Fahrzeug-Ausgabeeinheit angeschlossen ist.

Als Fahrzeug-Ausgabeeinheit werden üblicherweise Ausgabemedien wie ein so genanntes Central Information Display, ein Head-Up-Display oder eine Anzeige im Armaturenbrett des Fahrzeuges verwendet. Das Head-Up-Display ermöglicht die Projektion von Informationen auf die Windschutzscheibe des Fahrzeugs. Die Fahrzeuginsassen können somit gleichzeitig das Verkehrsgeschehen verfolgen und die Informationen von der Windschutzscheibe ablesen. Diese Fahrzeug-Ausgabeeinheiten kommunizieren üblicherweise mit Fahrzeug-Sensoren, um beispielsweise die Fahrgeschwindigkeit, die Öltemperatur oder andere fahrzeugspezifische Daten dem Fahrer anzuzeigen. Weitere Ausgabeeinheiten umfassen insbesondere Audio-Ausgabeeinheiten beispielsweise in Form von Signaltönen oder haptisches Feedback beispielsweise an einem so genannten Ergocommander oder Lenkrad.

Fahrzeug-Bedieneinheiten gibt es in vielfältigen Ausführungen. Üblicherweise handelt es sich um Tasten oder Schalter, die zur Steuerung von Fahrzeugfunktionen eingesetzt werden. Der Lichtschalter oder der Blinker sind Fahrzeug-Bedieneinheiten, die in jedem Kraftfahrzeug eingesetzt werden. Bedieneinheiten für Klima- und Stereoanlagen sind standardmäßig in modernen Fahrzeugen vorhanden. Ein Touch-Screen, eine Tastatur, eine Maus und/oder ein Mikrofon zur Sprachsteuerung werden ebenso als Fahrzeug-Bedieneinheiten eingesetzt. Weitere Funktionen wie Navigationssysteme und Funktelefone werden heutzutage auch per Bedieneinheiten vom Fahrzeugführer gesteuert.

Aufgrund der großen Anzahl von Fahrzeug-Bedieneinheiten und -Ausgabeeinheiten in modernen Fahrzeugen besteht die permanente Gefahr, dass der Fahrer durch die Vielzahl von Schaltern sowie Anzeigen vom Fahrgeschehen abgelenkt wird. Aus diesem Grund werden vermehrt akustische Anzeige- und Bedieneinheiten in Fahrzeugen eingesetzt, denn sie ermöglichen es, Fahrzeugfunktionen akustisch zu steuern, während der Verkehr visuell beobachtet wird. Moderne Spracherkennungstechnologie ermöglicht die Eingabe einer begrenzten Anzahl von Befehlen durch die menschliche Stimme. Aufgrund der großen Anzahl von störenden Geräuschen wie Motorengeräusch, Windgeräusche oder Stimmen von Beifahrern sind die Spracherkennungsraten weiterhin begrenzt. Häufig werden Ergocommander eingesetzt, um eine einfache Bedienung einer Vielzahl von Fahrzeugfunktionen zu ermöglichen. Der Ergocommander ist eine spezielle Vorrichtung, die im Uhrzeigersinn und entgegen den Uhrzeigersinn gedreht werden kann. Er kann wie ein Joystick horizontal und vertikal verschoben werden, und er kann gedrückt werden wie ein Knopf. Aufgrund der Verwendung des Ergocommanders können ein Vielzahl unterschiedlicher Fahrzeug-Funktionen mit einer einzelnen Fahrzeug-Bedieneinheit angesteuert werden.

Aus der deutschen Patentanmeldung DE 199 25 570 A1 ist ein Kommunikationssystem für ein Fahrzeug bekannt. Das bekannte Kommunikationssystem besitzt fahrzeugseitige Anwendungseinheiten zur Durchführung zugeordneter Anwendungsfunktionen sowie mehrere Kommunikationskanäle zur Kommunikation mit der Fahrzeugaußenwelt. Eine zentrale Kommunikationsplattformeinheit ist zur variablen Anbindung der Anwendungseinheiten an die Kommunikationskanäle vorgesehen.

Neben den eigentlichen fahrzeuginternen Funktionen werden vermehrt mobile Endgeräte von den Fahrern während der Fahrt eingesetzt. Zu den mobilen Endgeräten zählen insbesondere mobile Rechner, Telekommunikationsendgeräte und/oder Datenspeicher. Mobile Telekommunikationsendgeräte werden landläufig auch als Mobiltelefone oder Handys bezeichnet. Als Mobile Rechner werden so genannte Laptops oder PDAs eingesetzt. PDA steht für Personal Digital Assistant, was zu Deutsch persönlicher digitaler Helfer bedeutet. Moderne MP3-Player stellen ebenso mobile Rechner dar, die jedoch eine begrenzte Funktionalität Im Vergleich zu den Laptops oder PDAs aufweisen. Fahrzeugführer wollen heutzutage auch auf Ihre mobilen Endgeräte während der Fahrt zugreifen können. Für die mobilen Endgeräte werden Fahrzeughalterungen angeboten, in denen die mobilen Endgeräte abnehmbar montiert werden können. Bei der Bedienung der mobilen Endgeräte wird der Fahrer jedoch vom Verkehrsgeschehen abgelenkt.

Aus der WO-A1-2004 /053 722 ist ein Kommunikationssystem nach dem Oberbegriff des Anspruchs 1 bekannt.

Es ist Aufgabe der vorliegenden Erfindung, es dem Fahrzeugführer zu ermöglichen, auf ergonomische Weise mobile Endgeräte zu bedienen, ohne stark vom Verkehrsgeschehen abgelenkt zu werden.

Die Aufgabe wird durch den Gegenstand des Anspruchs 1 gelöst. Vorteilhafte Ausgestaltungen ergeben sich aus den abhängigen Ansprüchen.

Der Gegenstand der Erfindung betrifft ein Kommunikationssystem eines Kraftfahrzeuges. Das Kommunikationssystem umfasst eine Fahrzeug-Bedieneinheit, eine Fahrzeug-Ausgabeeinheit und einen Schnittstellenrechner. Der Schnittstellenrechner ist an die Fahrzeug-Bedieneinheit und die Fahrzeug-Ausgabeeinheit angeschlossen. Der Schnittstellenrechner ist dazu ausgebildet, ein mobiles Endgerät mit der Fahrzeug-Bedieneinheit und der Fahrzeug-Ausgabeeinheit derart zu verbinden, dass Informationen von dem mobilen Endgerät auf der Fahrzeug-Ausgabeeinheit darstellbar sind und das mobile Endgerät über die Fahrzeug-Bedieneinheit bedienbar ist. Der Fahrzeugführer kann somit das mobile Endgerät mit den fahrzeuginternen Ausgabe- und Bedieneinheiten steuern und muss nicht die Tastatur und das Display des mobilen Endgerätes selber betrachten. Damit wird die Anzahl der zu bedienenden Schalter und zu betrachtenden Anzeigen reduziert, so dass der Fahrer nicht nach den Anzeigen und Schaltern während der Fahrt suchen muss. Die Fahrzeug-Bedieneinheiten sind im Gegensatz zu den mobilen Endgeräten auf die Bedürfnisse eines Fahrzeuglenkers ausgerichtet. Der Fahrer kann beispielsweise das mobile Endgerät mit denselben Schaltern bedienen wie die Klimaanlage oder das integrierte Navigationssystem.

Als Fahrzeug-Bedieneinheit kann insbesondere ein Ergocommander, ein Touch-Screen, eine Tastatur, eine Maus und/oder ein Mikrofon zur Sprachsteuerung im Fahrzeug eingesetzt werden. Vorteilhaft an der Sprachsteuerung ist, dass der Fahrer nicht die Hand vom Lenkrad nehmen muss, um das mobile Endgerät zu bedienen. Der Touch-Screen ist ein Anzeigefeld, welches sowohl zum Anzeigen von Informationen als auch zum Eingeben von Befehlen verwendet wird. Die Befehle werden eingegeben, indem der Touch-Screen mit den Fingern oder einem geeigneten Stift berührt wird. Die Informationen, die üblicherweise auf der Anzeige des Laptops oder PDAs angezeigt werden, sind nun auf dem Touch-Screen sichtbar. Vorzugsweise werden ein Display, Lampen und/oder ein Head-Up-Display als Fahrzeug-Ausgabeeinheit eingesetzt. Ferner werden Audio-Ausgabeeinheiten, insbesondere zur Sprachausgabe, eingesetzt.

Der Schnittstellenrechner ist bevorzugt dazu ausgebildet, einen mobilen Rechner, ein Telekommunikationsendgerät und/oder einen Datenspeicher mit der Fahrzeug-Bedieneinheit und der Fahrzeug-Ausgabeeinheit zu verbinden. Der mobile Rechner kann insbesondere ein Laptop, ein PDA oder ein MP3-Player sein. Als Telekommunikationsgerät können Mobiltelefone eingesetzt werden. Es gibt allerdings auch mobile Rechner, die auch als Mobiltelefone genutzt werden können. Beispielsweise können UMTS- oder GSM-Kommunikationskarten in Laptops oder PDAs eingesetzt werden, um diese mobilen Rechner über UMTS drahtlos mit dem Internet zu verbinden. UMTS steht für Universal Mobile Telecommunications Systems, GSM für Global System for Mobile Communications. Daneben sind weitere Verbindungstechnologien, wie WLAN (Wireless Local Area Network), denkbar.Die Internetseiten können dann auf der Fahrzeug-Ausgabeeinheit wie dem Head-Up-Display angezeigt.

Der erfindungsgemäße Schnittstellenrechner verfügt vorteilhafterweise über eine erste Schnittstelle zur drahtgebundenen Kommunikation mit dem mobilen Endgerät. Als Schnittstelle kommt insbesondere eine USB-Schnittstelle in Frage. USB steht für universeller serieller Bus, der eine Standardschnittstelle zu Verbindung von Peripheriegeräten mit Computern ist. Ferner könnte der erfindungsgemäße Schnittstellenrechner zusätzlich oder alternativ eine zweite Schnittstelle zur drahtlosen Kommunikation mit dem mobilen Endgerät aufweisen. Heutzutage sind WLAN und Bluetooth bekannte Schnittstellten, die zur drahtlosen Kommunikation zwischen Computern eingesetzt werden. WLAN steht für wireless LAN und bezeichnet ein drahtloses Netwerk. Bluetooth ist ein weiterer Standard für die drahtlose Übermittlung von Sprache und Daten.

Vorteilhafterweise ist ein Fahrzeug-Systembus als Bestandteil des Kommunikationssystems vorgesehen. Der Fahrzeug-Systembus ist an den Schnittstellenrechner angeschlossen. Der Schnittstellenrechner fungiert als Gateway. Der englische Begriff Gateway bedeutet "Torweg" bzw. "Einfahrt". Ein Gateway ermöglicht die Kommunikation zwischen Rechnern aus unterschiedlichen Netzen, die auf völlig unterschiedlichen Protokollen basieren. Der Schnittstellenrechner ermöglicht die Kommunikation beispielsweise zwischen einem WLAN und dem fahrzeuginternen CAN, MOST oder Flexray. CAN steht für Controller Area Network und stellt ein rechnergestütztes Datenbussystem zur seriellen Datenübertragung dar. Verschiedene Steuergeräte können über den CAN ihre Informationen austauschen. Der CAN ist ebenso wie MOST ein Bussystem, das in modernen Fahrzeugen eingesetzt wird. MOST ist eine Abkürzung von mediaoriented systems transport. Es ist ein Bus im Kraftfahrzeug, der z. B. im Infotainment-Bereich eingesetzt wird. Damit ist es nicht nur möglich das mobile Endgerät über die Fahrzeug-Bedieneinheiten zu steuern, sondern das mobile Endgerät kann auch auf Fahrzeug-Informationen zugreifen. Die Kommunikation zwischen dem mobilen Endgerät und der Fahrzeug-Bedieneinheit und Fahrzeug-Ausgabeeinheit kann somit in Abhängigkeit vom Fahrzeugzustand gesteuert werden, wobei der Schnittstellenrechner Informationen über den Fahrzeugzustand von dem Fahrzeug-Systembus erhält. Beispielsweise könnte die Bedienung des mobilen Endgerätes an sich oder spezieller Funktionen unterbunden werden, wenn die Fahrzeuggeschwindigkeit einen vorbestimmten Wert, wie z. B. 10 km/h, überschreitet. Sollte das Fahrzeug selbständig Gefahrensituationen im Verkehr erkennen, so könnte in diesem Fall die Kommunikation mit dem mobilen Endgerät unterbunden werden.

Der Schnittstellenrechner hat vorzugsweise einen Zugangsschutz, damit das mobile Endgerät nur auf autorisierte Fahrzeugfunktionen zugreifen kann. Als möglicher Zugangsschutz kommt eine Firewall in Betracht. Die Firewall schirmt den Fahrzeug-Bus vor unberechtigten Zugriffen von dem mobilen Endgerät ab. Der Zugangsschutz könnte auch als Hardware ausgebildet sein. Ferner kann die Firewall in Form einer Software-Komponente auf einer so genannten Head-Unit ausgeprägt sein, die die Schnittstelle zum Endgerät bedient und vom weiteren Fahrzeugsystem isoliert ist bzw. nur dezidierte Zugriffe zulässt. Der Schnittstellenrechner kann selbst die Head-Unit darstellen. Die Head-Unit ist die zentrale Recheneinheit für Infotainment-Funktionen im Fahrzeug. In diesem Fall ist kein eigener weiterer Rechner nötig. Zur Sicherung der Fahrzeugelektronik könnte auch eine Authentifizierung vorgesehen werden, damit kein unberechtigter Benutzer auf die Fahrzeugdaten zugreifen kann. Zudem könnten die ausgetauschten Daten verschlüsselt werden, damit sie nicht von unbefugten Dritten abgehört werden können. Dies ist insbesondere dann angebracht, wenn der Informationsaustausch zwischen dem mobilen Endgerät und dem Schnittstellenrechner drahtlos erfolgt. Bei drahtloser Kommunikation besteht die Möglichkeit für Dritte, die ausgetauschten Informationen zu lesen, sofern diese nicht geeignet verschlüsselt sind.

Nachfolgend wird ein bevorzugtes Ausführungsbeispiel der vorliegenden Erfindung unter Bezugnahme auf die beigefügte Figur beschrieben.

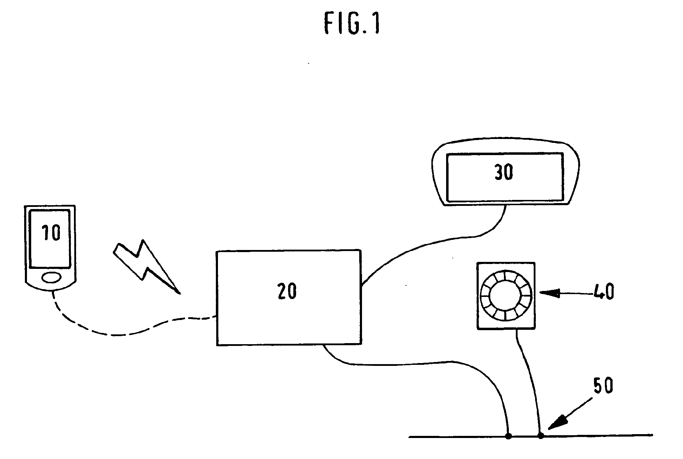

Figur 1 zeigt schematisch ein Kommunikationssytem gemäß dem bevorzugten Ausführungsbeispiel der vorliegenden Erfindung.

Das Kommunikationssystem gemäß Fig. 1 umfasst ein mobiles Endgerät 10, welches in dem Ausführungsbeispiel ein PDA ist. Der PDA 10 ist drahtlos mit einem Schnittstellen-Rechner 20 verbunden. Die Verbindung in dem Ausführungsbeispiel ist eine WLAN-Verbindung. Sowohl der PDA 10 als auch der Schnittstellenrechner 20 besitzen eine WLAN-Schnittstelle zur Bereitstellung der drahtlosen Verbindung. Der Schnittstellenrechner 20 ist zudem mit einer Fahrzeug-Ausgabeeinheit 30 und einem Fahrzeug-Systembus 50 verbunden. Eine Bedieneinheit 40 ist mittelbar über den Fahrzeug-Systembus 50 mit dem Schnittstellenrechner 20 verbunden. Die Fahrzeug-Ausgabeeinheit 30 ist in dem Ausführungsbeispiel ein zentrales Display, welches z.B. im Armaturenbrett des Fahrzeugs angeordnet ist. Bei der schematisch dargestellten Fahrzeug-Bedieneinheit 40 handelt es sich um einen Ergocommander, der auch zum Ansteuern weiterer Fahrzeugfunktionen in Verbindung mit der Fahrzeug-Anzeigeeinheit 30 verwendet wird. Der Fahrzeug-Systembus 50 ist ein CAN- oder MOST-Bus, der an eine Vielzahl von Fahrzeugvorrichtungen angeschlossen ist. Vorzugsweise ist ein MOST-Bus mit einem Gateway zu einem CAN-Bus vorgesehen. Das Fahrzeug hat also mehrere über Gateways verbundene Busse. Der Schnittstellenrechner 20 ist ein Gateway, der eine Kommunikation zwischen dem WLAN-Netz und dem CAN-Netz ermöglicht.

Die zur Darstellung auf dem PDA 10 vorgesehenen Informationen können über das WLAN an den Schnittstellenrechner 20 übertragen werden. Über eine feste Leitung gelangen die darzustellenden Informationen vorzugsweise an das Display 30. Die Informationen des PDA werden auf dem Anzeigefeld in an das Fahrzeugbedienkonzept angepasster Darstellung beispielsweise mit den gleichen Farben und Schriftarten wie sonst im Fahrzeug angezeigt. Die Berechnung der angepassten Darstellung übernimmt dabei üblicherweise der PDA. Der Fahrer kann den Inhalt des PDA 10 auf dem Display 30 betrachten, selbst wenn der PDA 10 im Kofferraum des Fahrzeugs untergebracht ist. Die Bedienung des PDA 10 kann über den Ergocommander 40 erfolgen. Mittels des Ergocommanders 40 kann ein Cursor über die dargestellten Informationen navigiert werden. Beispielsweise ist es möglich, ein in dem PDA 10 gespeichertes Office-Dokument aufzurufen, abgespeicherte E-Mails oder Internet-Seiten aufzurufen. Musik- oder Video-Dateien können über die (nicht dargestellte) Fahrzeug-Audio-/Videoanlage abgespielt werden. Dazu leitet der Schnittstellenrechner 20 die Musikdateien über den Fahrzeug-Systembus 50 an die Audio-/Videoanlage. Schließlich ist es auch möglich, fahrzeugspezifische Informationen über den Fahrzeug-Systembus 50 und den Schnittstellenrechner 20 an den PDA 10 auszugeben. Beispielsweise könnten von der Fahrzeugelektronik erkannte Betriebsstörungen an den PDA 10 ausgegeben werden. Der Zugriff des PDA 10 auf die Fahrzeugelektronik über den Fahrzeug-Systembus 50 wird mittels einer Firewall eingeschränkt, die auf dem Schnittstellenrechner 20 installiert ist.

### Bezugszeichenliste

- 10: Mobiles Endgerät
- 20: Schnittstellenrechner
- 30: Fahrzeug-Ausgabeeinheit
- 40: Fahrzeug-Bedieneinheit
- 50: Fahrzeug-Systembus

## Patentansprüche

1. Kommunikationssystem eines Kraftfahrzeuges, mit
- einer Fahrzeug-Bedieneinheit (40),
- einer Fahrzeug-Ausgabeeinheit (30),
- einem Schnittstellenrechner (20), der an die Fahrzeug-Bedieneinheit und die Fahrzeug-Ausgabeeinheit (30) angeschlossen ist, wobei
- der Schnittstellenrechner (20) dazu ausgebildet ist ein mobiles Endgerät (10) mit der Fahrzeug-Bedieneinheit (40) und der Fahrzeug-Ausgabeeinheit (30) derart zu verbinden, dass Informationen von dem mobilen Endgerät (10) auf der Fahrzeug-Ausgabeeinheit darstellbar sind und das mobile Endgerät über die Fahrzeug-Bedieneinheit bedienbar ist,
**dadurch gekennzeichnet,**
**dass** die Informationen des mobilen Endgeräts (10) auf der Fahrzeug-Ausgabeeinheit (30) in an das Fahrzeugbedienkonzept angepasster Darstellung angezeigt werden. wobei die Berechnung der angepassten Darstellung von dem mobilen Endgerät (10) vorgenommen wird.

2. Kommunikationssystem nach Anspruch 1,
**dadurch gekennzeichnet,**
**dass** die Fahrzeug-Bedieneinheit (40) einen Ergo-Commander, ein Touch-Screen, eine Tastatur, eine Maus und/oder ein Mikrofon zur Sprachsteuerung aufweist.

3. Kommunikationssystem nach Anspruch 1 oder 2,
**dadurch gekennzeichnet,**
**dass** die Fahrzeug-Ausgabeeinheit (30) eine haptische Ausgabeeinheit, eine Audio-Ausgabeeinheit, ein Display, Lampen, und/oder ein Hend-Up-Display aufweist.

4. Kommunikationssystem nach einem der Ansprüche 1 bis 3,
**dadurch gekennzeichnet,**
**dass** der Schnittstellenrechner (20) dazu ausgebildet ist, einen mobilen Rechner, ein Telekommunikationsendgerät und/oder einen Datenspeicher mit der Fahrzeug-Bedieneinheit (40) und der Fahrzeug-Ausgabeeinheit (30) zu verbinden.

5. Kommunikationssystem nach einem der Ansprüche 1 bis 4,
**dadurch gekennzeichnet,**
**dass** der Schnittstellenrechner (20) über eine erste Schnittstelle zur drahtgebundenen Kommunikation mit dem mobilen Endgerät (10) aufweist und/oder eine zweite Schnittstelle zur drahtlosen Kommunikation mit dem mobilen Endgerät (10) aufweist.

6. Kommunikationssystem nach einem der Ansprüche 1 bis 5,
**dadurch gekennzeichnet,**
**dass** ein Fahrzeug-Systembus (50) vorgesehen ist, der an den Schnittstellenrechner (20) angeschlossen ist.

7. Kommunikationssystem nach Anspruch 6,
**dadurch gekennzeichnet,**
**dass** der Schnittstellenrechner (20) dazu ausgebildet ist, die Kommunikation zwischen dem mobilen Endgerät (10) und der Fahrzeug-Bedleneinheit (40) und der Fahrzeug-Ausgabeeinheit (30) in Abhängigkeit vom Fahrzeugzustand zu steuern, wobei der Schnittstellenrechner (20) Informationen über den Fahrzeugzustand von dem Fahrzeug-Systembus (50) erhält.

8. Kommunikationssystem nach einem der Ansprüche 1 bis 6,
**dadurch gekennzeichnet,**
**dass** der Schnittstellenrechner (20) einen Zugangsschutz aufweist, damit das mobile Endgerät (10) nur auf autorisierte Fahrzeugfunktionen zugreifen kann.

9. Kommunikationssystem nach einem der Ansprüche 1 bis 8,
**dadurch gekennzeichnet,**
**dass** der Schnittstellenrechner (20) selbst eine zentrale Recheneinheit des Kraftfahrzeugs darstellt.

## Claims

1. A communication system of a motor vehicle, comprising
- a vehicle operating unit (40),
- a vehicle output unit (30),
- an interface computer (20), which is connected to the vehicle operating unit and the vehicle output unit (30), wherein
- the interface computer (20) is configured to connect a mobile terminal (10) to the vehicle operating unit (40) and the vehicle output unit (30) in such a way that information from the mobile terminal (10) can be displayed on the vehicle output unit and the mobile terminal can be operated, by the vehicle operating unit, **characterised in that** the information from the mobile terminal (10) is displayed on the vehicle output unit (30) in a display adapted to the vehicle operating concept, the calculation of the adapted display being carried out by the mobile terminal (10).

2. A communication system according to claim 1, **characterised in that** the vehicle operating unit (40) has an ergo commander, a touch screen, a keyboard, a mouse and/or a microphone for voice control.

3. A communication system according to claim 1 or 2, **characterised in that** the vehicle output unit (30) has a haptic output unit, an audio output unit, a display, lamps and/or a head-up display.

4. A communication system according to any one of claims 1 to 3, **characterised in that** the interface computer (20) is configured to connect a mobile computer, a telecommunication terminal and/or a data store to the vehicle operating unit (40) and the vehicle output unit (30).

5. A communication system according to any one of claims 1 to 4, **characterised in that** the interface computer (20) has a first interface for wired communication with the mobile terminal (10) and/or a second interface for wireless communication with the mobile terminal (10).

6. A communication system according to any one of claims 1 to 5, **characterised in that** a vehicle system bus, which is connected to the interface computer (20), is provided.

7. A communication system according to claim 6, **characterised in that** the interface computer (20) is configured to control the communication between the mobile terminal (10) and the vehicle operating unit (40) and the vehicle output unit (30) depending on the vehicle state, the interface computer (20) receiving information about the vehicle state from the vehicle system bus (50).

8. A communication system according to any one of claims 1 to 6, **characterised in that** the interface computer (20) has an access protection, so that the mobile terminal (10) can only access authorised vehicle functions.

9. A communication system according to any one of claims 1 to 8, **characterised in that** the interface computer (20) is itself a central computing unit of the motor vehicle.

## Revendications

1. Système de communication de véhicule automobile comportant :
- une unité de manoeuvre (40) dans le véhicule,
- une unité d'émission (30) dans le véhicule,
- un calculateur d'interface (20) relié à l'unité de manoeuvre dans le véhicule et à l'unité d'émission (30) dans le véhicule,
système dans lequel
- le calculateur d'interface (20) est réalisé pour relier un terminal mobile (10) à l'unité de manoeuvre de véhicule (40) et à l'unité d'émission de véhicule (30) de façon que les informations du terminal mobile (10) puissent être représentées sur l'unité d'émission du véhicule et le terminal mobile se commande par l'unité de commande de véhicule,
système **caractérisé en ce que**
- les informations du terminal mobile (10) sont affichées sur l'unité d'affichage du véhicule (30) dans une représentation adaptée au principe de commande du véhicule,
- le calcul de la représentation adaptée étant assuré par le terminal mobile (10).

2. Système de communication selon la revendication 1,
**caractérisé en ce que**
l'unité de manoeuvre (40) du véhicule comporte un dispositif de commande ERGO, un écran tactile, un clavier, un souris et/ou micro pour la commande vocale.

3. Système de communication selon la revendication 1 ou 2,
**caractérisé en ce que**
l'unité de sortie (30) du véhicule comporte une unité de sortie haptique, une unité de sortie audio, un afficheur, des lampes et/ou un afficheur tête haute.

4. Système de communication selon l'une des revendications 1 à 3,
**caractérisé en ce que**
le calculateur d'interface (20) est réalisé pour relier un calculateur mobile, un terminal de télécommunication et/ou une mémoire de données à l'unité de commande du véhicule (40) et l'unité de sortie de véhicule (30).

5. Système de communication selon l'une des revendications 1 à 4,
**caractérisé en ce que**
le calculateur d'interface (20) comporte une première interface pour une communication par fil avec le terminal mobile (10) et/ou une seconde interface pour une communication sans fil avec le terminal mobile (10).

6. Système de communication selon l'une des revendications 1 à 5,
**caractérisé par**
un système de bus de véhicule (50) relié au calculateur d'interface (20).

7. Système de communication selon la revendication 6,
**caractérisé en ce que**
le calculateur d'interface (20) est réalisé pour commander la communication entre le terminal mobile (10) et l'unité de manoeuvre (40) du véhicule ainsi que l'unité d'émission (30) en fonction de l'état du véhicule,
* le calculateur d'interface (20) recevant les informations concernant l'état du véhicule à partir du système de bus (50) du véhicule.

8. Système de communication selon l'une des revendications 1 à 6,
**caractérisé en ce que**
le calculateur d'interface (20) comporte une protection d'accès par laquelle le terminal mobile (10) ne peut accéder qu'à des fonctions autorisées du véhicule.

9. Système de communication selon l'une des revendications 1 à 8,
**caractérisé en ce que**
le calculateur d'interface (20) constitue lui-même une unité centrale de calcul du véhicule automobile.
